# EUROPEAN PATENT SPECIFICATION

(11) **EP 2 551 189 B1**
(45) Date of publication and mention of the grant of the patent: **31.08.2016**
(21) Application number: 12176471.6
(22) Date of filing: 13.07.2012
(51) Int. Cl.: B64C 7/00, B01J 13/18, B29C 73/16

(54) **Protective shield against ice impacts on aircraft**
Schutzschild vor Eisstößen auf einem Flugzeug
Écran de protection contre les impacts de glace sur un avion

(30) Priority: 29.07.2011 ES 201131330
(43) Date of publication of application: 30.01.2013
(73) Proprietor: Airbus Operations, S.L., 28906 Getafe Madrid (ES)
(72) Inventor: Guillemaut, Julien, 28906 Getafe (ES); Blanco Varela, Tamara, 28906 Getafe (ES); Folch Cortés, Diego, 28906 Getafe (ES); Goya Albaurrea, Pablo, 28906 Getafe (ES); Martino González, Esteban, 28906 Getafe (ES); Vinue Santolalla, Eduardo, 28906 Getafe (ES)
(74) Representative: Elzaburu Marquez, Alberto

(56) References cited:
- WO-A1-2007/003879
- WO-A2-2004/007608
- US-A1- 2005 250 878
- US-A1- 2009 036 568
- US-A1- 2010 331 445

## Description

### OBJECT OF THE INVENTION

This invention discloses a shield protection against ice impact for aircraft, especially propelled engine aircraft. It is included in the technical field of the aeronautical industry.

### PROBLEM TO BE SOLVED AND BACKGROUND OF THE INVENTION

Propelled engine aircraft are very common as transportation means, both in military and civil applications (for cargo or passengers use), in short and medium distances. Under certain weather conditions, propellers may expel ice fragments against the aircraft fuselage; the invention discloses a shield against ice impact on the aircraft fuselage using self-healing materials.

Shields for aircraft fuselages are used to protect aircraft structures due to ice or other objects which may impact on the aircraft surface. Unfortunately several impacts might occur in flight conditions, damaging aircraft shielding features; in order to maintain flight protecting performances, the present invention discloses a self healing material shield, which regenerates the protective material in flight conditions (and on-ground as well), increasing flight safety conditions.

The size of the ice fragments and the number of ice impacts may depend on the time spent by the aircraft within icing conditions. Most modern aircraft also have de-icing systems, including propeller de-icing devices, which reduce the severity of ice impacts during nominal flight. However, the case of a de-icing system failure during in-flight conditions must also be taken into account (in spite of a lower probability of occurrence). In such a scenario, the ice impacts might be more severe and the probability to get repetitive impacts is real (because the aircraft might stay a long time in icing conditions with non-operative de-icing systems).

A description of the different scenarios for ice formation on propellers is presented hereinafter.
Scenario 1: nominal configuration. All engines are operative and the de-icing systems are operative too. The aircraft enters icing conditions. The pilot can activate the de-icing systems within a short time (few minutes) and a few seconds later, the de-icing systems are effective. The aircraft will not spend a lot of time in icing conditions with non-effective de-icing systems (the maximum time estimated is a few minutes). Ice fragments can be formed and ejected from the propellers, but their size will not be very large. Such impacts can be qualified as "low energy impacts" but "highly probable impacts" (they will occur a lot because this is the nominal configuration). Therefore, there will be a lot of low energy impacts on the aircraft.
Scenario 2: failure configuration. All engines are operative and the de-icing systems fail. Several alternatives options may happen under this situation.
   Scenario 2.1. If the failure of the de-icing systems is detected, the pilot can change the flight plan to reduce the time spent in icing conditions. The order of magnitude of the maximum time spent within icing conditions is estimated to be about 15 minutes. Then, larger ice fragments can be formed on the blades compared to the nominal configuration. However, the probability of such an event is much lower. The order of magnitude of the probability is 10⁻⁵ per flight hour.
   Scenario 2.2. If the failure of the de-icing systems is not detected, the pilot will not change the flight plan and the aircraft will remain much longer in icing conditions. The maximum time spent within icing conditions is longer than in scenario 2.1, but the size of the fragments is not larger. Scenario 2.2 is identical to scenario 2.1 except that more impacts may occur. The probability for scenario 2.2 is even lower than the probability for scenario 2.1 (indeed, there is usually a segregation between de-icing systems and failure detection systems). The order of magnitude of the probability is usually 10⁻⁷ per flight hour.

Therefore, ice fragments may be expelled by the propellers, impacting the aircraft fuselage or other relevant parts of the airplane (for instance, vertical and horizontal tail planes). Consequently, a shielding protection is required to minimize in-flight damage of such aircraft parts. Because ice impacts may occur a lot (even during the same flight), it is necessary to define a robust protection against that kind of threat, in order to reduce the operating costs of the company. This is the objective of the invention.

Other damages may be produced when the aircraft is on-ground, for instance, during maintenance or overhaul operations. If no severe accident happens to the shielding protection during maintenance operations, the self-healing features make no further repairing action necessary.

The state of the art presents different approaches to self-healing and impact protecting materials for aeronautical use. Document WO 2007/003879 A1 discloses a self healing structure comprising a solid fibre material embedded in a resin matrix, providing repair facility by the use of curable two-part adhesive compositions in some of the fibres of the structure. Document GB 2 288 441 A reveals a propeller comprising a blade of multiple layer fibre-bond design and a protective contour attached along the blade. Nevertheless, no evidence about a shield for aircraft fuselages using self-healing materials according to the present invention has been found.

It is also known document US 2009/0365568 which discloses a self-healing material that comprises a matrix embedded with micro-pockets of a healing-agent releasable by a crack in the matrix. The healing-agent is able to bond to the matrix to repair the crack. The healing-agent is contained in microcapsules. A corresponding catalyst for the healing-agent is embedded in the matrix and contained in a plurality of microcapsules as an emulsion. The emulsion comprises an oil, a perfluorated solvent, a hydrophobic ionic liquid, or mixtures thereof. It also discloses a method of manufacturing the self-healing material which comprises the steps of identifying an operational temperature range of the material, providing at least one substance as the healing-agent, which substance remaining substantially in a liquid state within the operational temperature range, identifying an operational evaporation rate of the healing-agent and providing the substance with a curing time according to the evaporation rate.

### SUMMARY OF THE INVENTION

In order to achieve the objectives and to solve the aforementioned drawbacks, the invention has developed a protective shield against ice impacts on aircraft structures according to the disclosure of claim 1. This shield comprises plies of composite material having microcapsules, each microcapsule containing a healing agent. The microcapsules are made of urea-formaldehyde or polyvinyl alcohol.

In one embodiment of the invention, the composite material of the shield also has other microcapsules containing catalyst particles, and the healing agent contained in a microcapsule actuates when a crack produced at the shield reaches:
- at least a microcapsule with the healing agent, and
- at least a microcapsule with catalyst particles.

Then, the catalyst particles react with the healing agent, such healing agent becoming a polymerized healing agent.

The healing agent according to a disclosure not being part of the invention may be dicyclopentadiene; for this healing agent the catalyst particles reacting with it are tungsten hexachloride and diethyaluminum chloride (WCl₆-Et₂AlCl) particles, or ruthenium carbene complexes particles, or osmiun carbene complexes particles. The healing agent according to the invention is cyanoacrilate. For this healing agent the catalyst particles (3) are water particles.

In another layout according to a disclosure not being part of the invention the healing agent contained in the microcapsules is a thermoplastic polymer, but there are no other microcapsules with catalyst particles. The healing agent contained in the microcapsules becomes liquid when heating the shielding panels, spreading the healing agent within the crack. Then, when the temperature of the shielding panels decreases the healing agent turns back into a solid, hardening the crack. The shielding panels are manufactured using an epoxy resin, a bismaleimide (BMI) resin, or a thermoplastic resin (like PEEK (poly-ether-ether-ketone) resin or like PEKK (poly-ether-ketone-ketone) resin).

The invention also discloses a protective shield against ice impacts on aircraft structures, wherein the shield has shielding panels assembled on vertical and horizontal frames that are attached to the aircraft structure. This aircraft structure may be a part of a fuselage section, a vertical tail plane, a horizontal tail plane, an engine nacelle, or a pylon.

In order to provide a better understanding of this specification, and being an integral part thereof, a series of figures in which the object of the invention has been represented with an illustrative and not limitative manner are attached.

### BRIEF DESCRIPTION OF THE DRAWINGS

The invention will be better understood from reading the following detailed description taken together with the drawings in which similar reference designations are used to designate similar elements, and in which:
- Figure 1 illustrates the self-healing mechanism that occurs when the material is damaged (crack propagation) in the case of a self-healing material with microcapsules that contain a healing material.
- Figure 2 shows an overall view of an aircraft fuselage centre section (given as an example of application), with ice protection shielding.
- Figure 3 is a detailed view of how the shields are integrated; 3.1 describes the supporting frames that are attached to the fuselage, and figure 3.2 shows a detailed view of the shields attached to the previously mentioned frames.
- Figure 4 is another example of a rear-mounted engine aircraft with different possible locations for shieldings. In figure 4.1, the shield is located on the fuselage panels (outside). In figure 4.2, the shield is located on the vertical tail plane or the horizontal tail plane. In figure 4.3, the shield is located on the pylon structure.

A list of reference numbers used in the drawings is given hereinafter: 1 = composite material; 2 = microcapsules; 3 = catalyst particles; 4 = crack; 5 = healing agent, 6 = polymerized healing agent; 7 = main fuselage; 8 = frames; 9 = shielding panels; 10 = rear fuselage; 11 = pylon; 12 = vertical tail plane; 13 = horizontal tail plane; 14 = engine; 15 = engine nacelle.

### DETAILED DESCRIPTION

A description of the invention based on the aforementioned figures is made hereinafter.

There are two main embodiments relating "self-healing" composite materials:
- Microcapsules containing an adhesive material added to the composite material resin.
- Microcapsules containing a thermoplastic polymer added to the composite material resin.

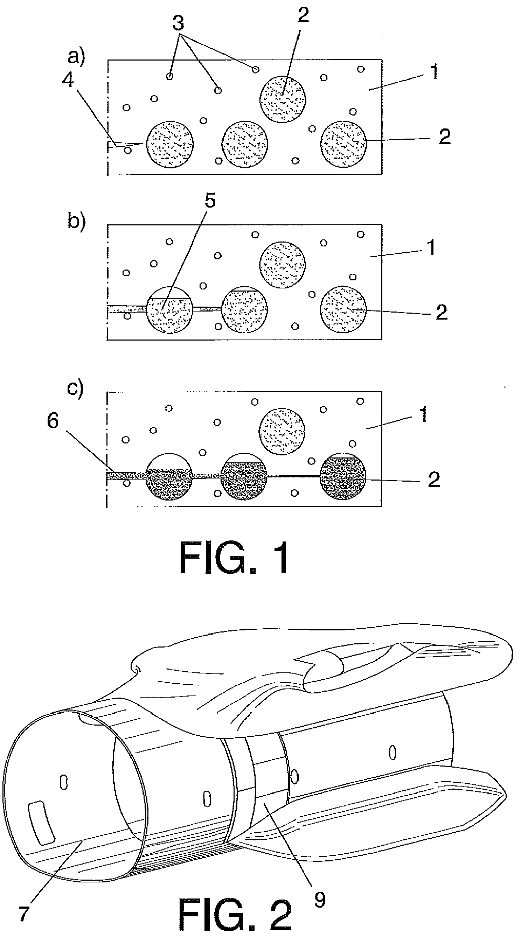

Figure 1 shows a sectional cross view of a composite material according to the first embodiment of "self-healing materials" presented in this invention. Figure 1.a) represents several plies of composite material (1) (the plies cannot be represented at this scale) having microcapsules (2). Some microcapsules (2) contain a healing agent (5) (usually adhesive material), and some microcapsules (2) contain catalysts particles (3). In figure 1 only the microcapsules (2) containing the healing agent (5) have been represented with their numerical reference; therefore, it must be understood that the catalyst particles (3) are also contained in their correspondent microcapsule (2). Figure 1.a) also shows the situation when a crack (4) begins to grow inside the composite material (1). This may occur for example when an ice fragment impact against the shield. Figure 1.b) represents the situation when the crack (4) reaches a microcapsule (2). The healing agent (5) is spread within the crack (4). Figure 1.c) represents how the healing agent (5) actuates.

When a crack (4) grows inside the composite material (1) it reaches any of the microcapsules (2) placed inside the composite (1) (see figure 1.b)). As the crack (4) increases its size, it also reaches catalyst particles (3) distributed all around the composite material (1). When the crack (4) is big enough, it makes the catalyst particles (3) contact the healing agent (5) inside a microcapsule (2) (see figure 1.c)). This healing agent (5) is a monomeric healing agent that reacts in the presence of the catalyst particles (3), filling the crack (4) with a polymerized healing agent (6) that is generated due to the reaction of the healing agent (5) with the catalyst particles (3).

The healing agent (5) can be, according to a disclosure not being part of the invention, dicyclopentadiene (DCPD) or, according to a disclosure being part of the invention, cyanoacrilate. The microcapsules (2) may be formed of urea-formaldehyde (UF) or polyvinyl alcohol (PVA) components. The catalyst particles (3) are also contained in microcapsules having similar characteristics to the microcapsules (2) containing the healing agent (5). There are several options when choosing catalyst particles (3).

When using dicyclopentadiene (DCPD) as healing agent (5), the catalyst particles (3) may be: a) a catalyst system based on tungsten hexachloride and diethyaluminum chloride (WCl₆-Et₂AlCl), or b) a catalyst system based on ruthenium carbene complexes or c) a catalyst system based on osmiun carbene complexes. The healing agent (5) and the catalyst particles (3), which are contained inside the microcapsules (2), are operative when liquid. If the healing agent (5) and the catalyst particles (3) are maintained in a liquid state when the crack is produced, the healing process will be realized immediately according to the previous explanations. If the healing agent (5) and the particles (3) are not maintained in a liquid state when the crack is produced, the healing process will be in a stand-by state until the conditions (temperature and pressure) are recovered.

When using cyanoacrilate as healing agent (5), the catalyst particles (3) may be water (specifically hydroxide ions). According to this configuration, the microcapsules (2) containing the catalyst particles (3) are filled up with liquid water or water steam for example.

According to a disclosure not being part of the invention, the microcapsules (2) contain self-healing materials (thermoplastic polymers like paraffin) that generate a healing process when heated, but no catalyst particles (3) are contained inside the composite material. Such kind of materials have the same function as the first kind of self-healing materials, the microcapsule (2) breaks because of the crack (4) growth, but the activation process is different. According to this second embodiment, the shield must be warmed up to activate the healing process, and this heating process makes the thermoplastic polymer (like paraffin) fill the crack (4). The thermoplastic polymer (like paraffin) which is used usually melts between 70 ºC and 80 ºC. Therefore, the activation of the healing process is done on ground, when the after-flight inspection has detected damage of the shields. In order to contribute to the right filling of the crack (4), the healing agent (5) should melt at a temperature lower than the microcapsules (2) melting temperature. The healing agent (5) melting temperature must also be lower than the glass transition temperature (Tg) of the resin integrating the composite material (1).

According to a disclosure not being part of the invention, the reaction of the healing agent (5), a thermoplastic polymer (like paraffin), is a two step process. First, when heating the shielding panels (9) the healing agent (5) becomes liquid, and this fluidity makes the healing agent (5) spread within the crack (4). Afterwards, when there is no heating process on the shielding panels (9) and their temperature decreases, the healing agent (5) turns back into a solid, hardening the crack (4). It can be understood that this second embodiment is a singular case of the first embodiment, wherein the catalyst particles (3) are substituted by a heat flow.

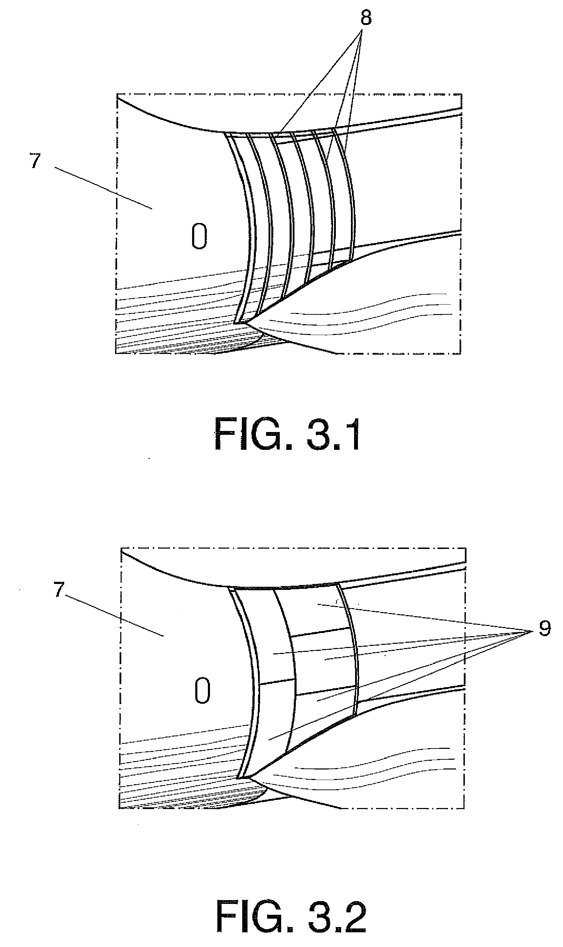

The shields disclosed in this invention are suitable for being used in several aircraft types, including rotary wing aircraft such as helicopters and fixed wing aircraft as well. These shields protecting the aircraft surface may have several configurations; figures 2, 3 and 4 present some of these configurations. The composite material (1) is placed as a shield on a structure above the aircraft fuselage. This situation is shown in figure 2 that represents an aircraft fuselage (7) with shielding panels (9). Such panels (9) are mounted on vertical and horizontal frames (8) (see figure 3.1) that are attached to the fuselage (7) in a conventional manner. Depending on the fuselage (7) area that is covered by the shield panels (9), such panels (9) adopt different geometric configurations (figure 3.2).

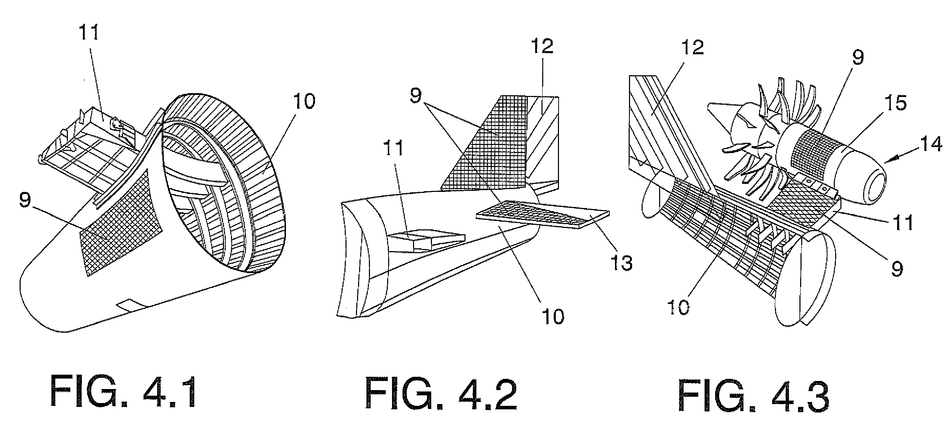

The shielding panels (9) may have other configurations that are shown in figure 4. Here, another example of a rear-mounted engine aircraft with different possible locations for shielding panels (9) is presented. In fgure 4.1, the shielding panels (9) are located on the rear fuselage (10) panels (outside). In figure 4.2, the shielding panels (9) are located on the vertical tail plane (12), although other alternative locations on the horizontal tail plane (13) are possible as well. Figure 4.3 represents the shielding panels (9) located on the pylon (11) structure and the engine nacelle (15).

Hence, there are several configurations when installing the shielding panels (9). The shielding panels (9) are assembled on vertical and horizontal frames (8) that are attached to the aircraft structure. Such aircraft structure may be a fuselage section, like the main fuselage (7) or the rear fuselage (10) (figure 4.1). The shielding panels (9) can also be assembled on other aircraft structure elements, like the engine pylon (11) (figure 4.3), the vertical tail plane (12) and the horizontal tail plane (13) (figure 4.2), and the engine nacelle (15). The protection given by the engine nacelle (15) may be especially important in some engines (14) having propellers, like the UDF (unducted fan) engines (see figure 4.3).

Different composite materials can be used when developing the preferred embodiment. The resin of the composite material used is an epoxy resin, bismaleimide (BMI) resin, thermoplastic resin (like PEEK (poly-ether-ether-ketone) or PEKK (poly-ether-ketone-ketone) resin) or other similar resins. The fibre used may be one of the generally known ones for aeronautical applications such as glass fibre, carbon fibre or Kevlar®, using several geometric configurations like one-dimensional, two-dimensional or three-dimensional woven fibres. These materials may be "pre-impregnated" (also called "prepreg") or the resin may be introduced by "infusion".

It should be appreciated that the mentioned embodiments are only examples, and they do not intend to limit the applicability, configuration or scope of the invention in any way. It is understood that some changes may be made in the functionality and arrangement of the elements described in the exemplary embodiment. The foregoing detailed description will provide those skilled in the art with a convenient road map for implementing an exemplary embodiment of the invention, without departing from the scope of the invention as set forth in the appended claims.

## Claims

1. Protective shield against ice impacts on aircraft structures, the shield comprising plies of composite material (1) having microcapsules (2), each microcapsule (2) containing a healing agent (5)
- the composite material (1) also has microcapsules (2) containing catalyst particles (3),
- the healing agent (5) contained in a microcapsule (2) actuates when a crack (4) produced at the shield reaches:
o at least a microcapsule (2) with the healing agent (5), and
o at least a microcapsule (2) with catalyst particles (3),
- and the catalyst particles (3) react with the healing agent (5), such healing agent (5) becoming a polymerized healing agent (6).
**characterized in that** the healing agent (5) is cyanoacrilate and the catalyst particles (3) are water particles.

2. Protective shield against ice impacts on aircraft structures according to claim 1, wherein the microcapsules (2) are made of urea-formaldehyde.

3. Protective shield against ice impacts on aircraft structures according to any claim 1 or 2, wherein the microcapsules (2) are made of polyvinyl alcohol.

4. Protective shield against ice impacts on aircraft structures according to any previous claim, wherein the shield has shielding panels (9) assembled on vertical and horizontal frames (8) that are attached to the aircraft structure.

5. Protective shield against ice impacts on aircraft structures according to claim 4, wherein the shielding panels (9) are manufactured using an epoxy resin, a bismaleimide (BMI) resin, or a thermoplastic resin (like PEEK (poly-ether-ether-ketone) resin or like PEKK (poly-ether-ketone-ketone) resin).

6. Protective shield against ice impacts on aircraft structures according to claims 4 or 5, wherein the aircraft structure is a part of a fuselage section (7, 10).

7. Protective shield against ice impacts on aircraft structures according to claims 4 or 5, wherein the aircraft structure is a vertical tail plane (12) or a horizontal tail plane (13).

8. Protective shield against ice impacts on aircraft structures according to claims 4 or 5, wherein the aircraft structure is an engine nacelle (15) or a pylon (11).

## Patentansprüche

1. Schutzschild gegen Eiseinschläge auf Luftfahrzeugstrukturen, wobei der Schild Lagen eines Verbundmaterials (1), welches Mikrokapseln (2) aufweist, umfasst, wobei jede Mikrokapsel (2) ein Heilungsmittel (5) enthält, wobei
- das Verbundmaterial (1) auch Mikrokapseln (2), die Katalysatorpartikel (3) enthalten, aufweist,
- das in einer Mikrokapsel (2) enthaltene Heilungsmittel (5) aktiv wird, wenn ein in dem Schild entstandener Riss (4):
• mindestens eine Mikrokapsel (2) mit dem Heilungsmittel (5), und
• mindestens eine Mikrokapsel (2) mit Katalysatorpartikeln (3) erreicht,
- und die Katalysatorpartikel (3) mit dem Heilungsmittel (5) reagieren, so dass das Heilungsmittel (5) ein polymerisiertes Heilungsmittel (6) wird,
**dadurch gekennzeichnet, dass** das Heilungsmittel (5) Cyanacrylat ist und die Katalysatorpartikel (3) Wasserpartikel sind.

2. Schutzschild gegen Eiseinschläge auf Luftfahrzeugstrukturen nach Anspruch 1, wobei die Mikrokapseln (2) aus Harnstoff-Formaldehyd gebildet sind.

3. Schutzschild gegen Eiseinschläge auf Luftfahrzeugstrukturen nach Anspruch 1 oder 2, wobei die Mikrokapseln (2) aus Polyvinylalkohol gebildet sind.

4. Schutzschild gegen Eiseinschläge auf Luftfahrzeugstrukturen nach einem der vorhergehenden Ansprüche, wobei der Schild Abschirmpaneele (9) aufweist, die auf vertikalen und horizontalen Rahmen (8) angeordnet sind, welche an der Luftfahrzeugstruktur befestigt sind.

5. Schutzschild gegen Eiseinschläge auf Luftfahrzeugstrukturen nach Anspruch 4, wobei die Abschirmpaneele (9) unter Verwendung eines Epoxidharzes, eines Bismaleimidharzes (BMI) oder eines thermoplastischen Harzes (wie PEEK (Polyetheretherketon) oder wie PEKK (Polyetherketonketon)) hergestellt sind.

6. Schutzschild gegen Eiseinschläge auf Luftfahrzeugstrukturen nach Anspruch 4 oder 5, wobei die Luftfahrzeugstruktur ein Teil eines Rumpfabschnittes (7,10) ist.

7. Schutzschild gegen Eiseinschläge auf Luftfahrzeugstrukturen nach Anspruch 4 oder 5, wobei die Luftfahrzeugstruktur ein vertikaler Heckflügel (12) oder ein horizontaler Heckflügel (13) ist.

8. Schutzschild gegen Eiseinschläge auf Luftfahrzeugstrukturen nach Anspruch 4 oder 5, wobei die Luftfahrzeugstruktur eine Triebwerksgondel (15) oder ein Pylon (11) ist.

## Revendications

1. Ecran de protection contre les impacts de glace sur des structures d'avion, l'écran comprenant des épaisseurs de matériau composite (1) ayant des microcapsules (2), chaque microcapsule (2) contenant un agent d'arrêt de casse (5),
- le matériau composite (1) a également des microcapsules (2) contenant des particules de catalyseur (3),
- l'agent d'arrêt de casse (5) contenu dans une microcapsule (2) fonctionne lorsqu'une fissure (4) qui se produit au niveau de l'écran atteint :
oau moins une microcapsule (2) avec l'agent d'arrêt de casse (5), et
oau moins une microcapsule (2) avec les particules de catalyseur (3),
- et les particules de catalyseur (3) réagissent avec l'agent d'arrêt de casse (5), de sorte que l'agent d'arrêt de casse (5) devient un agent d'arrêt de casse polymérisé (6),
**caractérisé en ce que** l'agent d'arrêt de casse (5) est du cyanoacrylate et les particules de catalyseur (3) sont des particules d'eau.

2. Ecran de protection contre les impacts de glace sur des structures d'avion selon la revendication 1, dans lequel les microcapsules (2) sont réalisées à partir d'urée formaldéhyde.

3. Ecran de protection contre les impacts de glace sur des structures d'avion selon l'une quelconque des revendications 1 ou 2, dans lequel les microcapsules (2) sont réalisées à partir d'alcool polyvinylique.

4. Ecran de protection contre les impacts de glace sur des structures d'avion selon l'une quelconque des revendications précédentes, dans lequel l'écran a des panneaux d'écran (9) assemblés sur des bâtis verticaux et horizontaux (8) qui sont fixés sur la structure d'avion.

5. Ecran de protection contre les impacts de glace sur des structures d'avion selon la revendication 4, dans lequel les panneaux d'écran (9) sont fabriqués en utilisant une résine époxy, une résine de bismaléimide (BMI) ou une résine thermoplastique (comme la résine PEEK (polyétheréthercétone) ou comme la résine PEKK (polyéthercétonecétone)).

6. Ecran de protection contre les impacts de glace sur des structures d'avion selon les revendications 4 ou 5, dans lequel la structure d'avion est une partie d'une section de fuselage (7, 10).

7. Ecran de protection contre les impacts de glace sur des structures d'avion selon les revendications 4 ou 5, dans lequel la structure d'avion est un plan stabilisateur vertical (12) ou un plan stabilisateur horizontal (13).

8. Ecran de protection contre les impacts de glace sur des structures d'avion selon les revendications 4 ou 5, dans lequel la structure d'avion est une nacelle de moteur (15) ou un pylône (11).
